# EUROPEAN PATENT APPLICATION

(11) **EP 3 683 675 A1**
(43) Date of publication of application: **22.07.2020**
(21) Application number: 19152539.3
(22) Date of filing: 18.01.2019
(51) Int. Cl.: G06F 8/60, G06F 8/34

(54) **SYSTEM, APPARATUS AND METHOD OF INTEGRATED DEPLOYMENT**

(71) Applicant: Siemens Aktiengesellschaft, 80333 München (DE)
(72) Inventor: CB, Anantha Padmanabhan, 560038 Bangalore, Karnataka (IN); KATRU, Siva Prasad, 560036 Bangalore, Karnataka (IN)
(74) Representative: Patentanwaltskanzlei WILHELM & BECK

(57) **Abstract**

A method of integrated deployment with an integration and deployment environment (100) configurable with a plurality of stages (120, 130, 140, 150, 160) associated with development and deployment of an application, wherein each of the plurality of stages (120, 130, 140, 150, 160) includes one or more tools. The method comprising selecting at least one tool (122, 132, 142, 164) in the plurality of stages for the development of the application, validating the selection of the at least one tool (122, 132, 142, 164) in each of the plurality of stages; and generating the integration and deployment environment based on the validated selection, wherein the integration and deployment environment (100) provides functionality of the selected at least one tool (122, 132, 142, 164) in each of the stages.

## Description

The present invention generally relates to improving speed and quality of application development process, and more particularly, to an integrated developer environment (IDE) for continuous integration and deployment environment and/or pipeline.

The techniques of continuous integration and continuous deployment are evolving. The techniques include automation and monitoring of software products such as applications, pipelines and developer and development environment at all stages of software engineering. The stages of software engineering may include development, integration, quality assurance, release to deployment environment and management of associated infrastructure.

The stages of software engineering may be reflected in an integrated developer environment (IDE). Each stage may include multiple tools to support a developer in the software engineering. The tools may be coupled to an infrastructure or developer/development environment. Accordingly, the developer may find it time consuming to generate software products with multiple tools.

In light of the above, there exists a need for a continuous integration and deployment environment and/or pipeline that is configured to support multiple tools and infrastructures.

The object of the invention is achieved by a method of integrated deployment with an integration and deployment environment configurable with a plurality of stages associated with development and deployment of an application. Each of the plurality of stages includes one or more tools.

As used herein "stages" refers to stages associated with development, testing and deployment of an application. The application is also referred to as an artifact and may include cloud application, an edge application, code snippet, hardware configuration, digital twin model, application programming interfaces (APIs), simulation model, connectivity solution, firmware, device configuration, security applications, and so on. Further, "tools" refer to software programs that are used in the development of the application. For example, tools include distributed version control tool, database import tools, repository version control tool, etc.

The method includes selecting at least one tool in the plurality of stages for the development of the application. At each stage one or more tools can be selected for the development of the application. The selection of the tools is important as the application deployment success may depend on the tools selected. Further, since certain tools are not compatible with each other the selection of the tools is made considering configuration parameters of the tools.

The method may include determining availability of infrastructure for the tools. The infrastructure comprises one of physical and virtual compute resources. The method may include generating the integration and deployment environment based on the availability of the infrastructure. Further, the method may include generating a continuous integration and deployment pipeline deployable on the integration and deployment environment based on the availability of the infrastructure. Furthermore, the method may include provisioning new infrastructure when the infrastructure for the tools are not available.

The method may include generating a tool model for each of the tools in at least one stage of the plurality of stages. As used herein, the tool model is a model of configuration parameters of the at least one tool. The configuration parameters include parameters associated with functionality, pre-requisite for tool operation, etc. The method may include comparing the configuration parameters of the tools based on functionality of each of the tools. The method may further include generating the tool model by abstracting comparable configuration parameters of the tools in the at least one stage.

The method may include generating the tool model for the tools in each of the plurality of stages. The tool model includes the determining compatibility between the tools in each of the plurality of stages based on the tool model. The method is advantageous as the tool model can determine compatibility of tools within a stage and across multiple stages.

The method may include defining connectivity between at least one tool in each of the plurality of stages based on the compatibility between the tools. The method may include generating an association dynamically between the plurality of stages by connecting the at least one tool between each of the plurality of stages.

The method includes validating the selection of the at least one tool in each of the plurality of stages. The method may include validating the selection of the at least one tool in each of the plurality of stages based on deployability of the application. As used herein "deployability of the application" refers to parameters associated with successful deployment of the application. For example, processing requirements and memory-based constraints on the application, bandwidth requirement, data security requirements, etc.

The method may further include validating the connectivity between the at least one tool in each of the plurality of tools based on a simulation of the application and/or the designated infrastructure in the integration and deployment environment and pipeline. Further, the method may include validating the tools in each of the plurality of stages by determining a tool status of the tools in run-time based on the tool model and the simulation of the application.

The method may include representing the validated selection as an executable graphical model. The method is advantageous as the validated selection of tools can be copied and repeated multiple times. Further, the validated selection can be modified based on future requirement.

The method includes generating the integration and deployment environment based on the validated selection. The integration and deployment environment provides functionality of the selected at least one tool in each of the stages. The method may include initiating integration of the selected at least one tool in each of the stages on a designated infrastructure by deploying the executable graphical model on the designated infrastructure. Further, the method may include developing and deploying an application on the designated infrastructure using the integration and deployment environment.

The method may include determining availability of the designated infrastructure based on the physical and virtual resources available with the designated infrastructure for the deployment of the application. Further, the method may include validating availability of the designated infrastructure in run-time by simulating the application on the integration and deployment environment based on the available physical and virtual resources.

The object of the present invention is also achieved by an apparatus for integrated deployment with one of an integration and deployment environment and pipeline. The apparatus comprising at least one processor and a memory coupled to the at least one processor. The memory comprising an integration and deployment module configured to perform the method in claims 1-11 to generate the integration and deployment environment and integration and deployment pipeline, wherein the integration and deployment module is further configured to deploy the integration and deployment pipeline in a designated infrastructure. The memory further comprising a repository module configured to manage a repository of tools and infrastructure employed to generate the integration and deployment environment.

The object of the present invention is also achieved by a system for integrated deployment with an integration and deployment environment configurable with a plurality of stages associated with development and deployment of an application. Each of the plurality of stages includes one or more tools. The system comprises a cloud computing platform comprising an integration and deployment module. The continuous integration and deployment module comprises an infrastructure module configured to determine availability of infrastructure for the tools, wherein the infrastructure comprises one of physical and virtual compute resources on which the integration and deployment environment is generated. The continuous integration and deployment module also comprises a model generator module configured to generate a tool model for each the tools in at least one stage of the plurality of stages. The continuous integration and deployment module comprises a selection module configured to select at least one tool in the plurality of stages for the development of the application based on the tool model and a validation module configured to validate selection of the at least one tool in each of the plurality of stages, whereby the integration and deployment environment is generated based on the validated selection, wherein the integration and deployment environment provides functionality of the selected at least one tool in each of the stages. The system also includes a graphical user interface configured to interactively display the integration and deployment environment.

The object of the present invention is also achieved by a computer program product comprising instructions which, when executed by the cloud computing system described above, cause the cloud computing system to carry out any of the method steps described above.

The above-mentioned and other features of the invention will now be addressed with reference to the accompanying drawings of the present invention. The illustrated embodiments are intended to illustrate, but not limit the invention.

The present invention is further described hereinafter with reference to illustrated embodiments shown in the accompanying drawings, in which:
- FIG 1: illustrates a graphical user interface displaying an integration and deployment environment and/or pipeline, according to an embodiment of the present invention;
- FIG 2: is a schematic representation of an apparatus for generating integration and deployment environment and/or pipeline, according to an embodiment of the present invention;
- FIG 3: is a schematic representation of a system for generating integration and deployment environment and/or pipeline, according to an embodiment of the present invention; and
- FIG 4: is a process flowchart illustrating an exemplary method of generating integration and deployment environment and/or pipeline, according to an embodiment of the present invention.

Various embodiments are described with reference to the drawings, wherein like reference numerals are used to refer the drawings, wherein like reference numerals are used to refer to like elements throughout. In the following description, for the purpose of explanation, numerous specific details are set forth in order to provide thorough understanding of one or more embodiments. It may be evident that such embodiments may be practiced without these specific details.

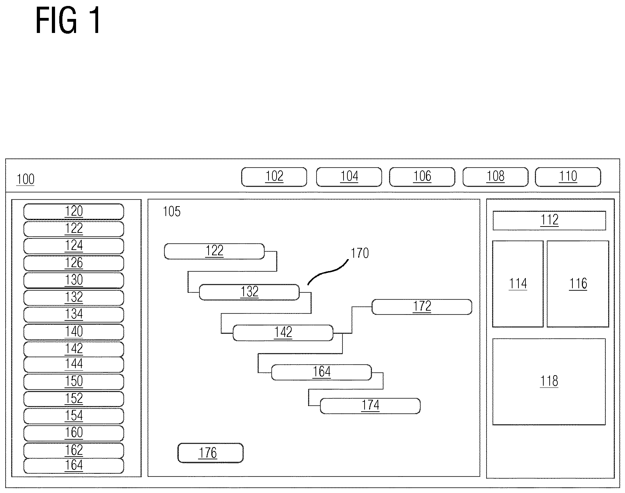

FIG 1 illustrates a graphical user interface displaying an integration and deployment environment and/or pipeline 100, according to an embodiment of the present invention.

The integration and deployment environment and/or pipeline 100 is configurable with a plurality of stages 120, 130, 140, 150 and 160. The plurality of stages 120, 130, 140, 150 and 160 are development stages associated with development and deployment of an application. The stages 120, 130, 140, 150 and 160 include Software Configuration Management (SCM) stage 120, Continuous Integration/Continuous Delivery (CI/CD) stage 130, testing stage 140, build stage 150 and deploy stage 160.

The application is also referred to as an artifact and may include cloud application, an edge application, code snippet, hardware configuration, digital twin model, application programming interfaces (APIs), simulation model, connectivity solution, firmware, device configuration, security applications, and so on.

Each of the plurality of stages 120, 130, 140, 150 and 160 includes one or more associated tools 122, 124, 126, 132, 134, 142, 144, 152, 154, 162 and 164. The tools 122, 124, 126, 132, 134, 142, 144, 152, 154, 162 and 164 are grouped based on their functionality. Examples of the tools in each of the stages 120, 130, 140, 150 and 160 is as follows. The SCM stage 120 may include distributed version control tool 122, database import tools 124, repository version control tool 126. Similarly, the CI/CD stage 130 includes tools 132 and 134, the testing stage 140 includes tools 142 and 144, the build stage 150 includes tools 152 and 154 and the deploy stage includes 162 and 164.

The integration and deployment environment and/or pipeline 100 provides for seamless connectivity between the tools 122, 124, 126, 132, 134, 142, 144, 152, 154, 162 and 164. The tools 122, 124, 126, 132, 134, 142, 144, 152, 154, 162 and 164 may be selected by a user developing the application or by the integration and deployment environment and/or pipeline 100 based on the application developed. Details of each of the tools 122, 124, 126, 132, 134, 142, 144, 152, 154, 162 and 164 and the stages 120, 130, 140, 150 and 160 are indicated in a description field 118. In an embodiment, the description field 118 is coupled to a repository of the tools and the stages.

In an embodiment, the user selects tool 122 and places the tool 122 in a canvas pane 105. When the tool 122 is placed in the canvas pane, a blank configuration template corresponding to the tool 122 is loaded. The integration and deployment environment and/or pipeline 100 will not run the tool 122 till remaining tools 132, 142 and 164 are placed in the canvas pane 105, connected and validated. For example, the user may select the tools 132, 142 and 164 by adding the tools to the canvas pane 105.

In another embodiment, the connectivity between tools 122, 132, 142 and 164 may be automatically generated based on the application. Specifically, the application is analysed to determine type of application, use of the application, deploy environment of the application, etc. Based on the analysis the integration and deployment environment and/or pipeline 100 is configured to select the tools 122, 132, 142 and 164 and establish connectivity between them. Further, the canvas pane 105 is configured with a suggestion field 176 that indicates what steps to do next to establish connectivity between the tools 122, 132, 142 and 164.

The connectivity between the tools 122, 132, 142 and 164 is dependent on configuration parameters of the tools and their compatibility. The configuration parameters modelled to generate tool models of each of the tools 122, 132, 142 and 164. The tool models include an abstraction of comparable configuration parameters of the tools 122, 132, 142 and 164. Further, the connectivity between the tools 122, 132, 142 and 164 is validated by simulating development/deployment of the application on the selected tools 122, 132, 142 and 164. The connected tools 122, 132, 142 and 164 are collectively referred to as a pipeline 170. The pipeline may further include action fields of notification to email recipients 172 or notification to stack management 174.

The integration and deployment environment and/or pipeline 100 include multiple fields 102, 104, 106, 108 and 110 that facilitate a user developing the application to import, export, validate or deploy the pipeline 170 or the application. The import field 102 is used to import the pipeline 170 when the pipeline 170 is developed and deployed in different infrastructures or reused by different project teams. The export field 104 is used to export the pipeline 170 to a designated infrastructure or to repeatedly deploy the pipeline 170 in multiple infrastructures.

The validate field 106 is used to validate the pipeline 170 to ensure that the application developed on the integration and deployment environment and/or pipeline 100 is deployed successfully. The validated field 106 can indicate/ rectify an incorrectly created pipeline. The field 110 is the settings field 110 to enable a user to configure the designated infrastructure where the pipeline or the application

The deploy field 108 triggers installation of the pipeline 170 on the designated infrastructure. The installation is triggered only after the pipeline 170 is built and validated. The user can notify status of the development of the pipeline 170 or the application by means of the fields 112, 114 and 116. The field 112 notifies recipients indicated in recipient field 114. Additional recipients can be added through the input field 116.

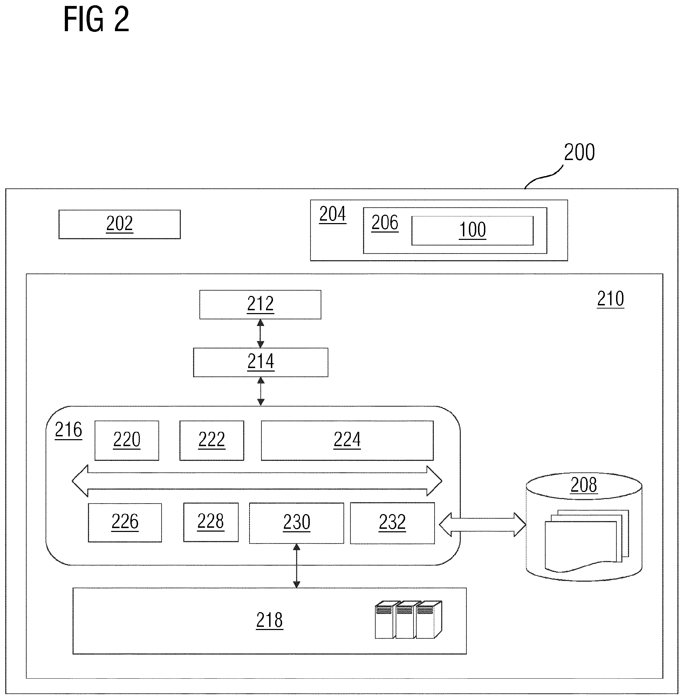

FIG 2 is a schematic representation of an apparatus 200 for generating integration and deployment environment and/or pipeline 100, according to an embodiment of the present invention.

The apparatus 200 includes a processor 202, a display 204 with a Graphical User Interface 206 to represent the integration and deployment environment and/or pipeline 100. The apparatus 200 also includes a repository 208 and a memory 210 configured with modules 212, 214 and 216. The apparatus 200 is connected to a designated infrastructure 218 on which the integration and deployment environment and/or pipeline 100 is deployed.

The processor 202 executes the modules 212, 214 and 216 in the memory 210 such that system 200 is configured to generate the integration and deployment environment and/or pipeline 100. During execution the modules 212, 214 and 216 are configured as follows. The interface module 212 is configured to establish the graphical user interface 206 to enable a user to interact with the integration and deployment environment and/or pipeline 100. The application gateway 214 is configured to interact with a backend module 216 to reflect the interaction of the user on the interface module 212. The backend module 216 is also referred to as integration and deployment module.

The backend module 216 includes an orchestration module 220 that is configured to receive request for development and deployment of the application. Further, the orchestration module 220 is configured to provide response to the application request. For example, the response to the request may include initiation of the development and deployment. In another example, the response may include rejecting the request if a user initiating the request is not authenticated.

The backend module 216 also includes authentication module 222 is configured to authenticate the request. Further, the authentication module 222 authenticates the user initiating the request to develop and deploy the application. In an embodiment, the module 222 is coupled with an Active directory and provides authentication the user authentication based on role-based access control.

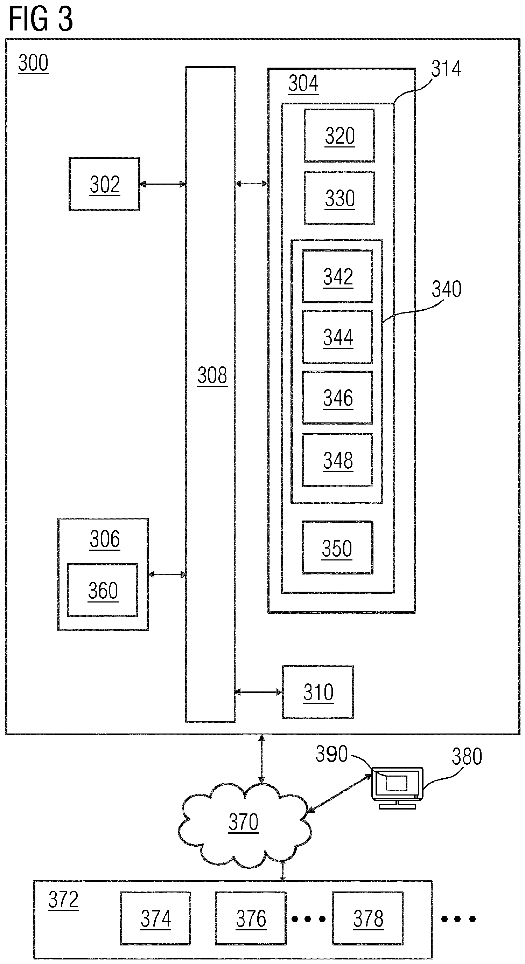

The backend module 216 includes an administration module 224 that administers all the modules in the backend module 216. The backend module 216 further includes an infrastructure module 226, a model generator module 228, selection module 230 and a validation module 232. Upon execution, the infrastructure module 226, the model generator module 228, the selection module 230 and the validation module 232 are used to generate the pipeline 170 as generated in FIG 1. The operation of each of the modules is elaborated in FIG 3.

In an embodiment, the interface module 212 is configured to represent the validated selection and association of the at least one tool (i.e. the pipeline 170) as an executable graphical model. The interface module 212 is configured to generate executable graphical model is represented on the Graphical User Interface 206 on a display device associated with the designated infrastructure.

FIG 3 is a schematic representation of a system 300 for generating the Integration and deployment environment and/or pipeline (IDEP) 390, according to an embodiment of the present invention. The system 300 comprises processing units 302, a memory unit 304, a storage unit 306, a communication interface 308, and the cloud interface 310.

The system 300 is communicatively coupled via a network interface 370 to a user device 380 configured as a designated environment for an application developed and deployed using the IDEP 390. Further, the system 300 is communicatively coupled to an industrial plant 372 via the network interface 370. The industrial plant 372 includes industrial assets 374, 376 and 378. The application developed is associated with the operation of the industrial plant 372 and/or one of the industrial assets 374, 376 and 378.

The processing units 302 may be one or more processor (e.g., servers). The processing units 302 is capable of executing machine-readable instructions stored on a computer-readable storage medium such as the memory unit 304 for performing one or more functionalities described in the foregoing description. In an embodiment, the memory unit 304 comprises a cloud computing platform 314 including modules that are stored in the form of machine-readable instructions and executable by the processing units 302. The cloud computing platform 314 may take a form of hardware such as a processor with embedded software. The cloud computing platform comprises an orchestration module 320, an authentication module 330, and an integration and deployment module 340 and a repository module 350.

The storage unit 306 can be volatile or non-volatile storage. In the preferred embodiment, the storage unit 306 is comprises a repository 360 for storing configuration parameters of tools and infrastructure employed to generate the IDEP 390. For example, the repository 360 includes pipeline templates, user profiles, infrastructure configurations, etc. The storage unit 306 may also store raw or aggregated data received from the industrial plant 372.

The communication interface 308 acts as interconnect means between different components of the cloud computing system 300. The communication interface 308 may enable communication between the processing units 302, the memory unit 304 and the storage units 306. The processing units 302, the memory unit 304 and the storage unit 306 may be in same location or at different locations remote from the industrial plant.

The cloud interface 310 is configured to establish and maintain communication links with the industrial plant 372. Also, the cloud interface 310 is configured to maintain a communication channel between the cloud computing system 300 and user device.

The processor 302 executes the modules 320-350 in the memory such that system 300 is configured to generate the IDEP 390 and the application on the user device 380. During execution the modules 320-350 are configured as follows. The orchestration module 320 is configured to receive request for development and deployment of the application. The orchestration module 320 is configured to manage the request by distributing the request within the cloud computing platform 314. For example, the orchestration module 320 distributes the request to the integration and deployment module 340. Further, the orchestration module 320 is configured to provide response to the application request. For example, the response to the request may include initiation of the development and deployment. In another example, the response may include rejecting the request if a user initiating the request is not authenticated.

The authentication module 330 is configured to authenticate the request. Further, the authentication module 330 authenticates the user initiating the request to develop and deploy the application. In an embodiment, the authentication module 330 is coupled with an Active directory and provides the user authentication based on role-based access control.

The integration and deployment module 340 is configured to generate the integration and deployment environment and/or pipeline 390. The integration and deployment module 340 includes an infrastructure module 342, a model generator module 344, selection module 346 and a validation module 348. The integration and deployment module 340 manages seamless operation of the modules 342, 344, 346 and 348 to enable generation of continuous integration and deployment environment and/or pipeline in a designated infrastructure. In an example, the integration and deployment pipeline is deployed in a Kubernetes cluster using Terraform scripts.

The infrastructure module 342 is configured to determine availability of infrastructure for tools in the IDEP 390. The infrastructure comprises one of physical and virtual compute resources. The infrastructure module 342 is further configured to generate the integration and deployment environment based on the availability of the infrastructure. Further, the infrastructure module 342 is configured to generate a continuous integration and deployment pipeline deployable on the integration and deployment environment based on the availability of the infrastructure. Furthermore, the infrastructure module 342 is configured to provision new infrastructure when the infrastructure for the tools are not available.

The model generator module 344 is configured to generate a tool model for each of the tools in at least one stage of the plurality of stages in the IDEP 390. The tool model is generated by comparing configuration parameters of the tools based on functionality of each of the tools. The tool model is generated by abstracting comparable configuration parameters of the tools in the at least one stage.

The model generator module 344 is further configured to define connectivity between at least one tool in each of the plurality of stages based on the tool model. Further, an association is generated dynamically by the model generator module 344 between the plurality of stages by connecting the at least one tool between each of the plurality of stages. Selection of the at least one tool in the plurality of stages for the development of the application is performed by the selection module 346.

The validation module 348 is configured to validate selected at least one tool in each of the plurality of stages based on deployability of the application. For example, the validation module 348 determines processing requirements and memory-based constraints on the application, bandwidth requirement, data security requirements, etc. The validation module 348 is configured to determine deployability of the application simulating by the designated infrastructure in the integration and deployment environment and pipeline.

The validation module 348 is configured to validate the connectivity between the at least one tool in each of the plurality based on simulation of the application on the IDEP 390. Further, availability of the designated infrastructure is validated based on the physical and virtual resources available with the designated infrastructure for the development and deployment of the application. In an embodiment, availability of the designated infrastructure is validated in run-time by simulating the application on the IDEP 390 based on the available physical and virtual resources on the designated infrastructure.

The repository module 350 is configured to manage the repository 360 of tools and infrastructure employed to generate the integration and deployment environment and/or pipeline 390. The cloud computing platform 314 may also include a log module (not shown in FIG 3) that generates logs of actions performed in the cloud computing platform 314. The log module is configured to monitor and collect metrics related to the integration and deployment environment and/or pipeline 390.

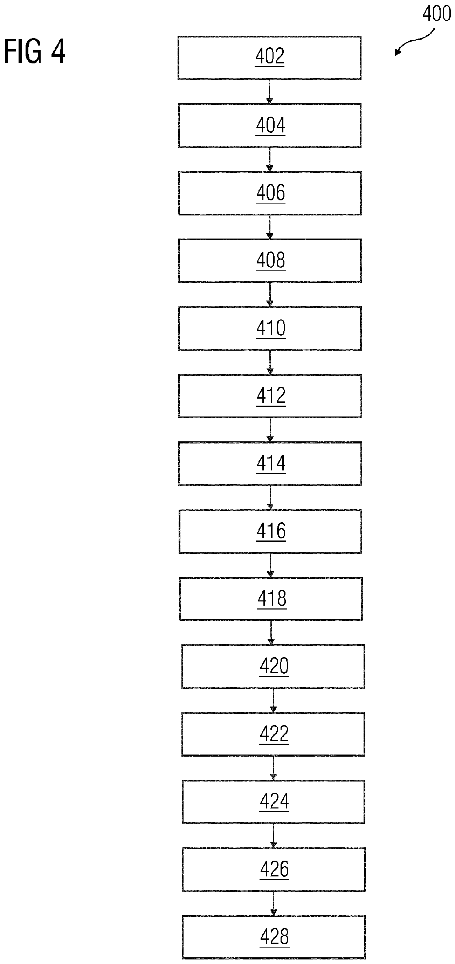

FIG 4 is a process flowchart illustrating an exemplary method of generating integration and deployment environment and/or pipeline, according to an embodiment of the present invention. The integration and deployment environment and/or pipeline is configurable with a plurality of stages associated with development and deployment of an application. Each of the plurality of stages includes one or more tools that may be selected by a user for development and deployment of the application.

The method begins at step 402 with determining availability of infrastructure for the tools. The infrastructure comprises one of physical and virtual compute resources. There may be two kinds of infrastructure, first infrastructure relates to the infrastructure that is used mainly for development of the environment and pipeline. The second infrastructure is a designated infrastructure where the environment and pipeline will be deployed. The availability determination at step 402 is in relation to the infrastructure that is used for the development of the environment and pipeline.

At step 404 a tool model is generated for each of the tools in at least one stage of the plurality of stages. The tool model is generated by comparing configuration parameters of the tools based on functionality of each of the tools. The step 404 also includes generating the tool model by abstracting comparable configuration parameters of the tools in the at least one stage. The step 404 is perform for each of the plurality of stages and compatibility between the tools in each of the plurality of stages is determined based on the tool model.

At step 406 connectivity between at least one tool in each of the plurality of stages is defined based on the tool model. Further, at step 406 an association is generated dynamically between the plurality of stages by connecting the at least one tool between each of the plurality of stages.

At step 410 at least one tool in the plurality of stages is selected for the development of the application. Further, at step 412 the selection of the at least one tool in each of the plurality of stages is validated based on deployability of the application. As used herein, deployability of the application refers to parameters associated with successful deployment of the application. For example, processing requirements and memory-based constraints on the application, bandwidth requirement, data security requirements, etc. Step 412 may further include determining deployability of the application simulating by the designated infrastructure in the integration and deployment environment and pipeline.

At step 414 the connectivity between the at least one tool in each of the plurality is validated of based on simulation of the application on the integration and deployment environment and/or pipeline. At step 416 availability of the designated infrastructure determined based on the physical and virtual resources available with the designated infrastructure for the development and deployment of the application.

At step 418 availability of the designated infrastructure is validated in run-time by simulating the application on the integration and deployment environment based on the available physical and virtual resources.

At step 420 the validated selection and association of the at least one tool is represented as an executable graphical model. In an embodiment, the executable graphical model is represented on a Graphical User Interface on a display device associated with the designated infrastructure. The executable graphical model can be replicated in multiple infrastructures. The executable graphical model may be modified independently on different infrastructures. The scalability and repeatability of the executable graphical model enables accurate recreation of the integration and deployment environment and pipeline in any infrastructure.

At step 422 the integration and deployment environment and/or pipeline is generated based on the validated selection. The integration and deployment environment and/or pipeline provides functionality of the selected at least one tool in each of the stages.

At step 424 integration of the selected at least one tool in each of the stages is initiated on the designated infrastructure. The integration is initiated by deploying the executable graphical model on the designated infrastructure.

At step 426 a log of all activities performed to generate integration and deployment environment and/or pipeline is maintained. At step 428 the application developed and deployed on the designated infrastructure using the integration and deployment environment and/or pipeline.

The present invention can take a form of a computer program product comprising program modules accessible from computer-usable or computer-readable medium storing program code for use by or in connection with one or more computers, processors, or instruction execution system. For the purpose of this description, a computer-usable or computer-readable medium can be any apparatus that can contain, store, communicate, propagate, or transport the program for use by or in connection with the instruction execution system, apparatus, or device. The medium can be electronic, magnetic, optical, electromagnetic, infrared, or semiconductor system (or apparatus or device) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and DVD. Both processors and program code for implementing each aspect of the technology can be centralized or distributed (or a combination thereof) as known to those skilled in the art.

FIG 1
Integration and deployment environment and/or pipeline 100
Import field 102
Export field 104
Canvas pane 105
Validate field 106
Deploy field 108
Settings field 110
Notification field 112
Recipient field 114
Input field 116
Description field 118
Stages 120, 130, 140, 150 and 160
Software Configuration Management (SCM) stage 120
Continuous Integration/Continuous Delivery (CI/CD) stage 130,
Testing stage 140
Build stage 150
Deploy stage 160
Tools 122, 124, 126, 132, 134, 142, 144, 152, 154, 162 and 164.
Distributed version control tool 122
Database import tool 124
Repository version control tool 126
Description field 118
pipeline 170
Email recipients 172
Stack management 174

FIG 2
apparatus 200
processor 202
display 204
Graphical User Interface 206
Repository 208
Memory 210
Designated infrastructure 218
Interface module 212
Backend module 216
Orchestration module 220
Authentication module 222
Administration module 224
Infrastructure module 226
Model generator module 228
Selection module 230
Validation module 232

FIG 3
System 300
Processing units 302
Memory unit 304
Storage unit 306
Communication interface 308
Cloud interface 310
Cloud computing platform 314
Orchestration module 320
Authentication module 330
Integration and deployment module 340
Infrastructure module 342
Model generator module 344
Selection module 346
Validation module 348
Repository module 350
Repository 360
Network interface 370
Industrial plant 372
Industrial assets 374, 376 and 378
User device 380

Integration and deployment environment and/or pipeline (IDEP) 390

FIG 4 method

## Claims

1. A method of integrated deployment with an integration and deployment environment (100) configurable with a plurality of stages (120, 130, 140, 150, 160) associated with development and deployment of an application, wherein each of the plurality of stages (120, 130, 140, 150, 160) includes one or more tools, the method comprising:
selecting at least one tool (122, 132, 142, 164) in the plurality of stages for the development of the application;
validating the selection of the at least one tool (122, 132, 142, 164) in each of the plurality of stages; and
generating the integration and deployment environment based on the validated selection, wherein the integration and deployment environment (100) provides functionality of the selected at least one tool (122, 132, 142, 164) in each of the stages.

2. The method according to claim 1, further comprising:
representing the validated selection as an executable graphical model;
initiating integration of the selected at least one tool (122, 132, 142, 164) in each of the stages on a designated infrastructure by deploying the executable graphical model on the designated infrastructure; and
developing and deploying an application on the designated infrastructure using the integration and deployment environment (100).

3. The method according to one of claim 1 and claim 2, further comprising:
determining availability of infrastructure for the tools, wherein the infrastructure comprises one of physical and virtual compute resources;
generating the integration and deployment environment based on the availability of the infrastructure; and
generating a continuous integration and deployment pipeline deployable on the integration and deployment environment based on the availability of the infrastructure.

4. The method according to claim 3, wherein determining availability of infrastructure for the tools comprises:
provisioning new infrastructure when the infrastructure for the tools are not available.

5. The method according to claim 1, further comprising:
generating a tool model for each of the tools in at least one stage of the plurality of stages.

6. The method according to claim 5, wherein generating the tool model for each of the tools in at least one stage of the plurality of stages comprises:
comparing configuration parameters of the tools based on functionality of each of the tools; and
generating the tool model by abstracting comparable configuration parameters of the tools in the at least one stage.

7. The method according to claim 5, further comprising:
generating the tool model for the tools in each of the plurality of stages; and
determining compatibility between the tools in each of the plurality of stages based on the tool model.

8. The method according to claim 1, wherein selecting at least one tool in the plurality of stages for the development of the application comprises:
defining connectivity between at least one tool in each of the plurality of stages based on the compatibility between the tools; and
generating an association dynamically between the plurality of stages by connecting the at least one tool between each of the plurality of stages.

9. The method according to claim 1, wherein validating the selection of the at least one tool in each of the plurality of stages comprises:
validating the selection of the at least one tool in each of the plurality of stages based on deployability of the application; and
validating the connectivity between the at least one tool in each of the plurality of based on a simulation of the application the integration and deployment environment.

10. The method according to claim 9, further comprising:
validating the tools in each of the plurality of stages by determining a tool status of the tools in run-time based on the tool model and the simulation of the application.

11. The method according to one of claim 1-10, wherein the method of integrated deployment is a method of creating and maintaining continuous integration and continuous deployment pipeline and environment.

12. An apparatus (200) for integrated deployment with one of an integration and deployment environment and pipeline, the apparatus comprising:
at least one processor (202); and
a memory (210) coupled to the at least one processor (202), the memory (210) comprising:
an integration and deployment module (216) configured to perform the method in claims 1-11 to generate the integration and deployment environment and integration and deployment pipeline, wherein the integration and deployment module (216) is further configured to deploy the integration and deployment pipeline in a designated infrastructure; and
a repository module (208) configured to manage a repository of tools and infrastructure employed to generate the integration and deployment environment.

13. The apparatus according to claim 12, wherein the apparatus further comprising:
an orchestration module (220) configured to receive request for development and deployment of the application; and
an authentication module (222) configured to authenticate the request.

14. A system (300) for integrated deployment with one of an integration and deployment environment and pipeline configurable with a plurality of stages associated with development and deployment of an application, wherein each of the plurality of stages includes one or more tools, the system (300) comprising:
a cloud computing platform (314) comprising:
an integration and deployment module (340), wherein the continuous integration and deployment module comprises:
an infrastructure module (342) configured to determine availability of infrastructure for the tools, wherein the infrastructure comprises one of physical and virtual compute resources on which the integration and deployment environment is generated;
a model generator module (344) configured to generate a tool model for each the tools in at least one stage of the plurality of stages;
a selection module (346) configured to select at least one tool in the plurality of stages for the development of the application based on the tool model;
a validation module (348) configured to validate selection of the at least one tool in each of the plurality of stages, whereby the integration and deployment environment is generated based on the validated selection, wherein the integration and deployment environment provides functionality of the selected at least one tool in each of the stages; and
a graphical user interface (390) configured to interactively display the integration and deployment environment.

15. A computer-program product, having machine-readable instructions stored therein, that when executed by a processor, cause the processor to perform method steps according to any of the claims 1-11.
